# EUROPEAN PATENT APPLICATION

(11) **EP 4 631 335 A1**
(43) Date of publication of application: **15.10.2025**
(21) Application number: 25166526.1
(22) Date of filing: 27.03.2025
(51) Int. Cl.: A01C 7/10, A01C 15/00

(54) **MOBILE AGRICULTURAL MATERIAL APPLICATION MACHINE AND METHOD OF OPERATING SUCH**

(30) Priority: 08.04.2024 US 202418629203
(71) Applicant: Deere & Company, Moline, IL 61265 (US)
(72) Inventor: Kale, Mandar M., Mannheim (DE); Manjrekar, Prasad, Mannheim (DE); Thakur, Deepak, Mannheim (DE)
(74) Representative: Reichert, Christian

(57) **Abstract**

A mobile agricultural material application machine (100, 2), comprising: one or more ground engaging traction elements (20, 30) configured to carry the machine over a worksite along a travel path; one or more material tanks (12, 14, 16, 18/ 202, 204, 206, 208); one or more material quantity sensors (345, 349) configured to detect a quantity of the material in the one or more material tanks; one or more calibration conditions sensors (340) configured to generate calibration conditions sensor data; and a control system (314) configured to: determine (824) conditions are suitable to perform a material application rate calibration operation while the machine travels along the travel path based on the calibration conditions sensor data; and perform (826) the calibration operation based on the determination that conditions are suitable to perform the calibration operation. Furthermore, a method of controlling such mobile agricultural material application machine is disclosed.

## Description

### FIELD OF THE DESCRIPTION

This disclosure relates to measurement of a material in a container and is particularly useful in the context of measurement of commodities or other materials stored in a tank of an agricultural material application machine.

### BACKGROUND

There are a wide variety of material application machines that apply commodities or other material to an agricultural worksite, such as a field. Material application machines are controlled to achieve a target material application rate. One type of agricultural material application machine is a mobile agricultural material application machine, such as a mobile air cart. A mobile air cart applies material (e.g., seeds, fertilizer, etc.) at a field. Mobile air carts are controlled to achieve a target material application rate to thus produce a desired crop stand. Errors in the material application rate can lead to reduced yields and thus reduced profitability. Additionally, when the material is applied at too high a rate, the costs of the operation are increased and thus profitability is reduced.

The discussion above is merely provided for general background information and is not intended to be used as an aid in determining the scope of the claimed subject matter.

### SUMMARY

A mobile agricultural material application machine includes one or more ground engaging traction elements configured to carry the machine along a travel path, one or more material tanks configured to hold a material, one or more material quantity sensors configured to detect a quantity of the material in the one or more material tanks and generate material quantity sensor data indicative thereof, one or more calibration conditions sensor configured to detect one or more calibration conditions and generate calibration conditions sensor data indicative thereof, and a control system configured to determine conditions are suitable to perform a material application rate calibration operation while the mobile agricultural travels along the travel path based on the calibration conditions sensor data and perform the material application rate calibration operation while the mobile agricultural material application travels along the travel path based on the determination that conditions are suitable to perform the material rate calibration operation.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a side view of an example mobile agricultural material application machine.
FIG. 2 is a side view of an example set of tanks.
FIG. 3 is a side view of an example tank.
FIG. 4 is a sectional view of the tank in FIG. 3.
FIG. 5 is a block diagram of one example agricultural material application system architecture.
FIG. 6 is a block diagram showing examples of items of agricultural material application system architecture, in more detail.
FIGS. 7A-7B (collectively referred to herein as FIG. 7) show a flowchart illustrating one example operation of an agricultural material application system architecture.
FIG. 8 is a block diagram shown one example of items of an agricultural material application system architecture in communication with a remote server architecture.
FIGS. 9-11 show examples of mobile devices that can be used in an agricultural material application system architecture.
FIG. 12 is a block diagram showing one example of a computing environment that can be used in an agricultural material application system architecture.

### DETAILED DESCRIPTION

For the purpose of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

Additionally, it will be understood that while various examples detailed herein proceed in the context a mobile air cart, the systems and methods described herein are applicable to and can be used in various other types of material application machines including, but not limited to, other types of agricultural material application machines (e.g., mobile mounted row crop planters, etc.), dry spreaders, as well as various other types of material application machines.

As discussed above, it is desirable to control a material application machine, such as a mobile air cart, to achieve a desired material application rate. In some current systems, a target material application rate is provided (e.g., by an operator or user, from a prescription source, such as a prescription map, as an output of a control system, or in some other way). In such current systems, a stored relationship between material application rate, machine travel speed, and material meter actuation (e.g., material meter speed, material meter displacement, etc.) is used to control the mobile air cart, based on the target material application rate. The stored relationship may be any of a variety of relationships including, but not limited to, a look-up table, an equation, a function, a control mapping, as well as various other relationships. In some examples, both the travel speed and the material meter actuation (e.g., speed, displacement, etc.) are controlled to achieve the target material application rate, based on the target material application rate and the stored relationship. In some examples, the travel speed is controlled in some other way and the material meter actuation is controlled to achieve the target material application rate, based on the travel speed, the target material application rate, and the stored relationship.

Some current systems include calibration functionality. The calibration functionality includes one or more material quantity sensors (e.g., weight sensors, material level sensors, etc.), distributed across the air cart that detect a quantity of the material in the one or more tanks of the air cart. Based on a difference between a measured quantity of the material in the one or more tanks and a reference material quantity (e.g., previously measured material quantity, etc.), and based on an indication of the area covered while seeding (e.g., based on sensed speed, location (e.g., GPS) tracking, etc., in combination with machine dimensions or an application area (e.g., material spread)) since the time that the reference material quantity corresponds to, a calibrated material application rate can be calculated. The calibrated material application rate can be used to update the stored relationship, such as where there is a difference between the calibrated material application rate and the material application rate corresponding to the current stored relationship (and the machine settings for the relevant time period) or the target material application rate. The mobile air cart can be controlled (e.g., the travel speed or the metering speed, or both, of the air seeder can be controlled) based on the updated (or calibrated) relationship.

In such current systems, to ensure an accurate (or reliable) material quantity measurement for the calibration functionality, travel of the air cart is halted. This is because various error can be introduced to the material quantity measurement while the air cart is travelling. For example, bouncing or shaking of the air cart, while travelling, can introduce error to the material quantity measurement. Having to stop the air cart during the operation increases downtime and thus increases costs and may lead to missing the ideal window for material application, either of which can reduce profitability.

Thus, it would be useful to provide systems and methods that allow for material rate calibration while a material application machine, such as a mobile air cart, is travelling. The present discussion proceeds with example systems and methods that provide for material rate calibration while a material application machine, such as a mobile air cart, is traveling. The systems and methods provide for detecting of one or more calibration conditions and determining whether calibration can be executed, while the machine is travelling, based on the detected one or more calibration conditions, and further, for calibrating the material application rate control (e.g., adjusting the stored relationship) based on the calibrated material application rate detected while the machine is travelling. Additionally, in some examples, the systems and methods provide for identifying the cause of difference of the calibrated material application rate. The systems and methods also provide for control of the material application machine, as well as other items, based on the calibrated material application rate or based on the identified cause of error, or both.

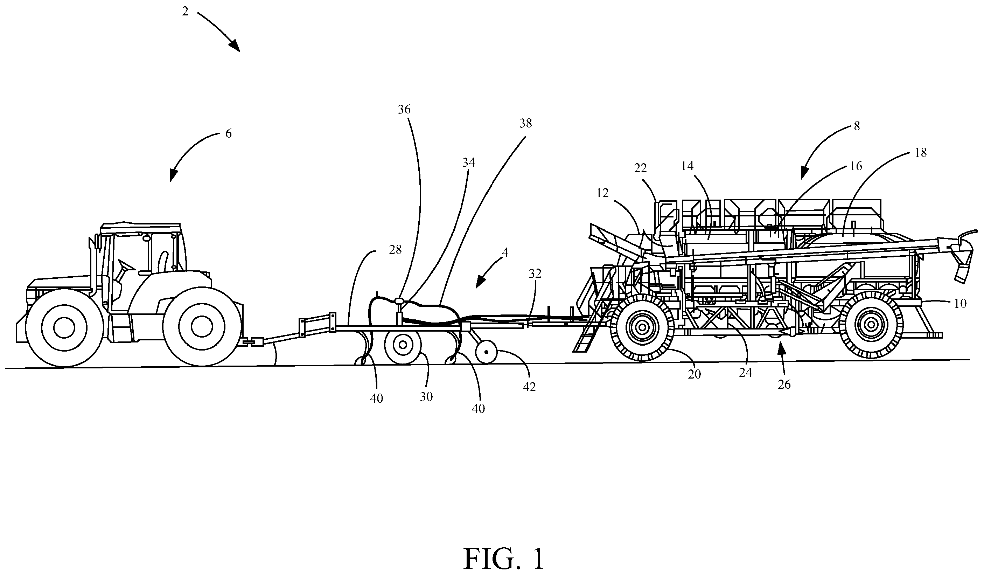

FIG. 1 is a side view of an example of a mobile agricultural air cart 1, that includes, a towing machine 6 (illustratively a tractor) and as an agricultural implement, an air or pneumatic cart 2. The air cart 2 comprises a tilling implement 4 (also sometimes called a drill) towed between the towing machine 6 and a commodity cart 8 (also sometimes called an air cart). The commodity cart 8 has a frame 10 upon which a series of material tanks 12, 14, 16, 18, and wheels 20 (a representative one of which is labeled) are mounted. Each material tank has a door 22 (a representative one of which is labeled) releasably sealing an opening at its upper end for filling the tank with material, most usually a commodity of one type or another. A metering system 24 is provided at a lower end of each tank (a representative one of which is labeled) for controlled feeding or draining of material (most typically granular material) into a pneumatic distribution system 26. The tanks 12, 14, 16 and 18 can be any suitable device for holding a material or commodity such as seed or fertilizer to be distributed to the soil. The tanks can be hoppers, bins, boxes, containers, etc. The term "tank" shall be broadly construed herein. Furthermore, one tank with multiple compartments can also be provided instead of separated tanks. The tanks can be constructed of any material or materials, one example being a plastic material.

The tilling implement 4 includes a frame 28 supported by ground wheels 30 and is connected to a leading portion of the commodity cart 8, for example by a tongue style attachment (not labeled). The commodity cart 8 as shown is sometimes called a "tow behind cart," meaning that the cart follows the tilling implement 4. In an alternative arrangement, the cart can be configured as a "tow between cart," meaning the cart is between the towing machine 6 and tilling implement 4. In yet a further possible arrangement, the commodity cart 8 and tilling implement 4 can be combined to form a unified rather than separated configuration. These are just examples of additional possible configurations. Other configurations are even possible and all configurations should be considered contemplated and within the scope of the present description.

The pneumatic distribution system 26 includes one or more fans (not shown) connected to a material delivery conduit structure having multiple material flow passages 32. The one or more fans pressurize the materials tanks and direct air through the flow passages 32. Each material metering system 24 controls delivery of material from its associated tank at a controllable rate to the transporting airstreams moving through flow passages 32. In this manner, each flow passage 32 carries material from the tanks to a secondary distribution tower 34 on the tilling implement 4. Typically, there will be one tower 34 for each flow passage 32. Each tower 34 includes a secondary distributing manifold 36, typically located at the top of a vertical tube. The distributing manifold 36 divides the flow of material into a number of secondary distribution lines 38. Each secondary distribution line 38 delivers material to one of a plurality of ground engaging tools 40 (also known as ground openers) that open a furrow in the soil and facilitates deposit of the material therein. The number of flow passages 32 that feed into secondary distribution may vary from one to eight or ten or more, depending at least upon the configuration of the commodity cart 8 and tilling implement 4. Depending upon the cart and implement, there may be two distribution manifolds 36 in the air stream between the meters 24 and the ground engaging tools 40. Alternatively, in some configurations, the material is metered directly from the tank or tanks into secondary distribution lines that the ground engaging tools 40 without any need for an intermediate distribution manifold. The configurations described herein are only examples. Other configurations are possible and should be considered contemplated and within the scope of the present description.

A firming or closing wheel 42 associated with each ground engaging tool 40 trails the tool and firms the soil over the material deposited in the soil. In practice, a variety of different types of tools 40 are used including, but not necessarily limited to, tines, shanks and disks. The tools 40 are typically moveable between a lowered position engaging the ground and a raised position riding above the ground. Each individual tool 40 may be configured to be raised by a separate actuator. Alternatively, multiple tools 40 may be mounted to a common component for movement together. In yet another alternative, the tools 40 may be fixed to the frame 28, the frame being configured to be raised and lowered with the tools 40.

Examples of air or pneumatic cart 2 described above should not be considered limiting. The features described in the present description can be applied to any seeder configuration, whether specifically described herein or not.

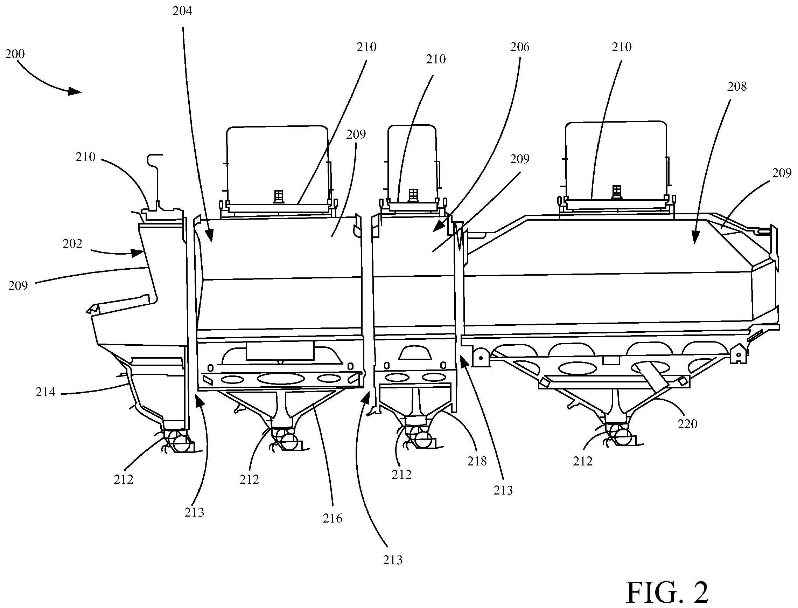

FIG. 2 is a side view of an example set of tanks 200, which includes individual tanks 202, 204, 206, and 208. Tanks 200 are a more detailed representation of what the tanks 12, 14, 16 and 18 described in relation to FIG. 1 might look like. Similar to the tanks shown FIG. 1, tanks 202, 204, 206 and 208 each include a door 210 releasably sealing an opening at its upper end for filling the tank with material, most usually a commodity of one type or another. Tanks 200 also each include a metering system 212 provided at a lower end of each tank for controlled feeding of material (most typically granular material) into a pneumatic or other distribution system.

A spacing gap 213 is illustratively maintained where tanks 202, 204, 206, and 208 are adjacent to one another when they are placed into a functional position on a commodity cart (not shown in FIG. 2). The gaps 213 help to avoid tank-to-tank contact, which for some applications could be a requirement. Such contact is a possibility because the holding chamber portion 209 of each tank is often fabricated of a plastic type or other potentially expandable material. After repetitive use over time, especially when chamber portion 209 is frequently pressurized, the material sometimes expands and even deforms. With that in mind, the tanks 202, 204, 206, and 208 are each provided with a supporting structure 214, 216, 218, and 220, respectively. These supporting structures are each configured to encourage the gap 213, even if chamber portions 209 expand or become deformed.

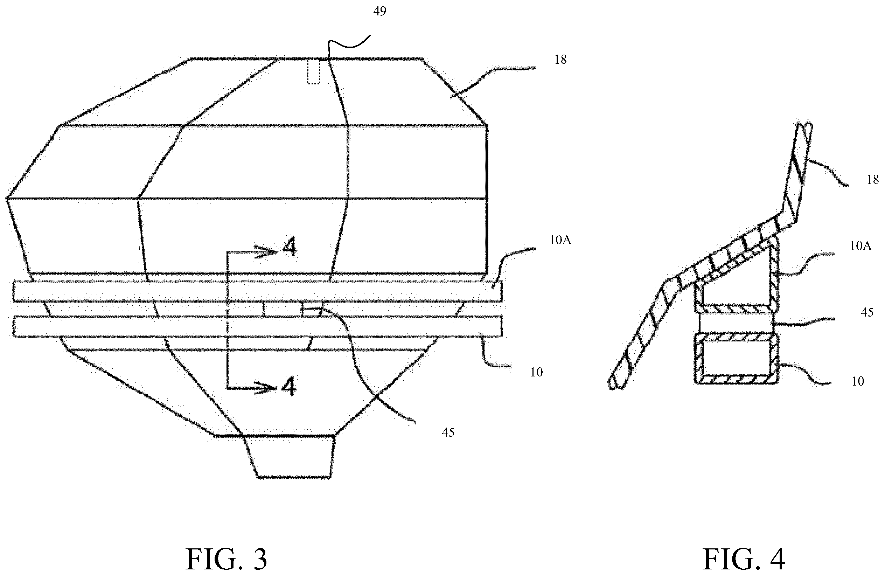

In some implementations, the weight of each of tanks 202, 204, 206 and 208 and some (or none or all) of the weight of supporting structures 214, 216, 218, and 220 is balanced across one or more load cells (not shown inf FIG. 2). For example, the load cells can be positioned between the supporting structures 214, 216, 218, and 220 and a main frame (e.g., 10) of the implement. These load cells are part of a measurement system that collects data that is in one way or another indicative of a quantity of content in each tank. An example of a load cell distribution is shown in FIGS. 3-4.

FIG. 3 is a side view of a material tank 18. FIG. 4 is a sectional view of the material tank 18 as seen from the line 4-4 of FIG. 3. As shown in FIGS. 3-4 material tank 18 is supported on the main frame 10 by one or more weight sensors 45. In one example, weight sensors 45 are load cells. In other examples, the weight sensors 45 can be scales, or other sensor devices capable of measuring weight. As illustrated in FIGS. 3-4, the weight sensors 45 are disposed between the tank support structure (frame) 10A and the main frame 10. While only one sensor 45 is shown in FIGS. 3-4, it will be understood that a plurality of weight sensors 45 can be disposed between the tank support structure 10A and the main frame 10 and spaced apart from one another. As further shown in FIG. 3, material tank 18 can include a material level sensor 49 disposed to detect a level (or volume) of material in material tank 18. In some examples, a material level sensor 49 can include an ultrasonic sensor, a camera, a lidar or radar, or another type of sensor. A material sensor 49 can include a receiver configured to receive a wave (e.g., sound wave, electromagnetic radiation, etc.) that reflects from the material. In some examples, the material sensor may also include a transmitter.

While the example shown in FIG. 3 shows the material level sensor 49 disposed inside the material tank 18, in other examples, the material level sensor could be disposed wholly or partially outside of the tank 18 and be configured to detect the interior of the tank 18. Additionally, while only one sensor 49 is shown in FIG. 3, it will be understood that a plurality of level sensor 49 can be disposed to detect the interior of tank 18. Additionally, it will be understood that the arrangement shown in FIGS. 3-4 can be utilized for each material tank of the air cart 2, for example, for each of tanks 12, 14, 16, and 18. Additionally, it will be understood that the arrangement shown in FIGS. 3-4 can be utilized for each material tank 202, 204, 206, and 208.

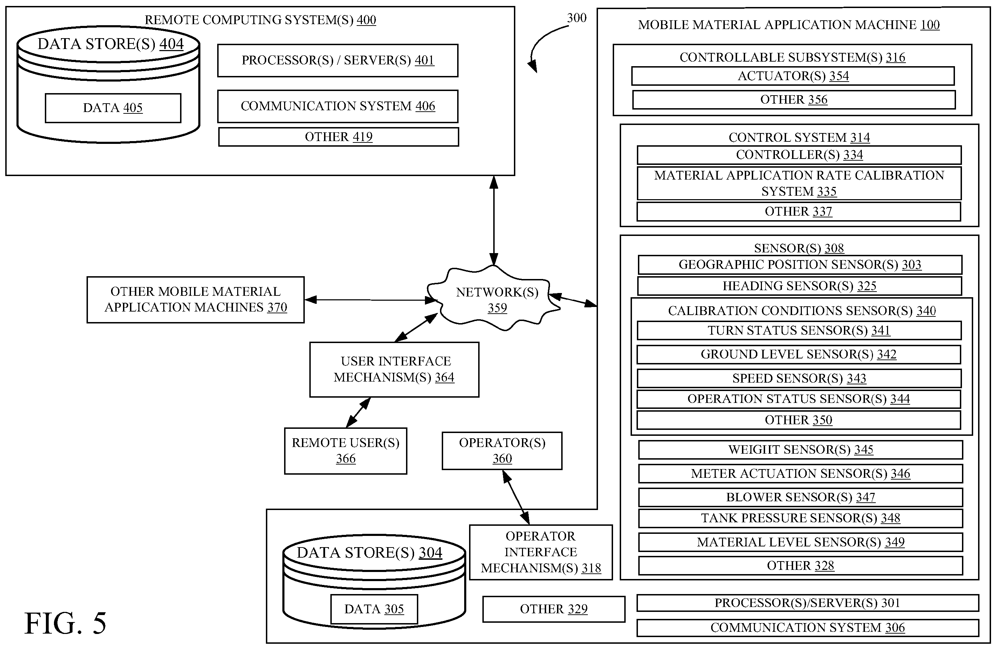

FIG. 5 is a block diagram of a material application system architecture 300 (also referred to herein as material application system 300 or system 300). FIG. 5 shows that material application system 300 includes a mobile material application machine 100 (e.g., mobile air cart 2, etc.), one or more remote computing systems 400, one or more remote user interfaces 364, and one or more other mobile material application machines 370. Material application machine 100, itself, illustratively includes one or more processors or servers 301, one or more data stores 304, a communication system 306, one or more sensors 308, a control system 314, one or more controllable subsystems 316, and can include various other items and functionality 329. Remote computing systems 400, themselves, illustratively include one or more processors or servers 401, one or more data stores 404, a communication system 406, and can include various other items and functionality 419.

Other mobile material application machines 370 can be similar to mobile material application machine 100, for instance, where machine 100 is a mobile air cart (e.g., mobile air cart 2) other machines 370 can be other, similar, mobile air carts.

Data stores 304 and 404 store a variety of data (generally indicated as data 305 and 405 respectively), some of which will be described in more detail herein. For example, one or more of data 305 and 405, can include, among other things, a stored material application rate relationship (e.g., describing a relationship between material application rate, material meter actuation (e.g., material meter speed, material meter displacement, etc.), and machine travel speed), sensor data, reference material quantity data, calibration condition rules, target material application rates, thresholds, machine data, preference data, settings data, diagnostics data, as well as a variety of other data. Additionally, data 305 can include computer executable instructions that are executable by one or more processors or servers 301 to implement other items or functionalities, or both, of system 300, including, but not limited to, other items or functionalities, or both, of mobile material application machine 100. Additionally, data 405 can include computer executable instructions that are executable by one or more processors or servers 401 to implement other items or functionalities, or both, of material application system 300, including, but not limited to, other items or functionalities, or both, of remote computing systems 400. It will be understood that data stores 304 and data stores 404 can include different forms of data stores, for instance one or more of volatile data stores (e.g., Random Access Memory (RAM)) and non-volatile data stores (e.g., Read Only Memory (ROM), hard drives, solid state drives, etc.).

Sensors 308 can include one or more geographic position sensors 303, one or more heading sensors 325, one or more calibration conditions sensors 340, one or more weight sensors 345, one or more meter actuation sensors 346, one or more blower sensors 347, one or more tank pressure sensors 348, material level sensors 349, and can any of a variety of other sensors 328. Calibration conditions sensors 340, themselves, can include one or more turn status sensors 341, one or more ground level sensors 342, one or more speed sensors 343, one or more operation status sensors 344, and can include any of a variety of other sensors 350 operable to detect calibration conditions.

Geographic position sensors 303 illustratively sense or detect the geographic position or location of material application machine 100 Geographic position sensors 303 can include, but are not limited to, a global navigation satellite system (GNSS) receiver that receives signals from a GNSS satellite transmitter. Geographic position sensors 303 can also include a real-time kinematic (RTK) component that is configured to enhance the precision of position data derived from the GNSS signal. Geographic position sensors 303 can include a dead reckoning system, a cellular triangulation system, or any of a variety of other geographic position sensors.

Heading sensors 325 detect a heading characteristic (e.g., travel direction) of a corresponding material application machine 100. This can include sensors that sense the movement or angular displacement (e.g., turn radius) of ground engaging traction elements (e.g., wheels, etc.), or of components coupled to the ground engaging traction elements, or other elements. In another example, heading sensors 325 can utilize signals received from other sources, such as geographic position sensors 303. Thus, while heading sensors 325 as described herein are shown as separate from geographic position sensors 303, in some examples, machine heading is derived from signals received from geographic position sensors 303 and subsequent processing. In other examples, heading 325 are separate sensors and do not utilize signals received from other sources. In another example, heading sensors 325 can utilize signals received from other sources, such as turn status sensors 341 (discussed below). Thus, while heading sensors 325 as described herein are shown as separate from turn status sensors 341, in some examples, machine heading is derived from signals received from turn status sensors 341 and subsequent processing. In other examples, heading 325 are separate sensors and do not utilize signals received from other sources.

Calibration conditions sensors 340 are operable to detect one or more calibration conditions and generate sensor data (e.g., signals, images, etc.) indicative thereof. As discussed herein, calibration conditions can include turn status (or turn rate), ground level (or machine stability), machine travel speed characteristics, operation status sensors (e.g., whether the material application machine is actively operating, for instance, whether the implement/tools are raised or lowered), as well as various other calibration conditions. It will be understood that the calibration condition sensor data can be used to determine and thus are indicative of whether it is suitable to perform a material application rate calibration operation.

Turn status sensors 341 illustratively detect a turn status (or turn rate) of material application machine 100. Turn status sensors 341 can include inertial measurement units (IMUs) which can include a combination of one or more gyroscopes, one or more accelerometers, one or more magnetometers. Turn status sensors 341 can detect a turn status (or turn rate) such as a yaw rate, which can indicate whether or not the material application machine 100 is performing a turn, such as a headland turn. It may be suitable to perform a material application rate calibration operation while the machine 100 is traveling, when the machine 100 is performing a turn, such as a headland turn.

Ground level sensors 342 illustratively detect a ground level (or machine stability, such as machine orientation or machine bouncing, or both) corresponding to machine 100. Ground level sensors 341 can include inertial measurement units (IMUs) which can include a combination of one or more gyroscopes, one or more accelerometers, one or more magnetometers. Ground level sensors 342 can detect machine pitch and roll, or machine bouncing (oscillating/reciprocating movement in one of a plurality of axes), which can indicate whether or not the material application machine 100 is stable (e.g., is traveling on smooth ground). It may be suitable to perform a material application rate calibration operation while the machine 100 is traveling, when the machine 100 is stable (e.g., pitch and roll rate or machine bouncing at acceptable levels, or when traveling over smooth ground).

While the examples herein show turn status sensors 341 and ground level sensors 342 as separate sensors, in some examples, machine turn status (or turn rate) and ground level (or machine stability) can be detected using the same sensors (e.g., the same IMUs).

Speed sensors 343 sensors 325 detect machine travel speed characteristics (e.g., travel speed, acceleration, deceleration, etc.), of a material application machine 100. This can include sensors that sense the movement (e.g., rotation) of ground-engaging traction elements (e.g., wheels, etc.), or movement of components coupled to the ground engaging traction elements, or other elements. In other examples, speed sensors 325 can utilize signals received from other sources, such as geographic position sensors 303. Thus, while speed sensors 343 as described herein are shown as separate from geographic position sensors 303, in some examples, machine travel speed characteristics are derived from signals received from geographic position sensors 303 and subsequent processing. In other examples, speed sensors 343 are separate sensors and do not utilize signals received from other sources. It may be suitable to perform a material application rate calibration operation while the machine 100 is traveling at given speeds (e.g., at or less than two miles per hour (mph)).

Operation status sensors 344 illustratively detect a status of the operation of the material application machine 100, for example, whether the machine 100 is actively carrying out a sub-operation. For instance, in the case of material application machine 100 in the form of mobile air cart 2, operation status sensors 344 can detect whether mobile air cart 2 is actively generating furrows (or otherwise tilling the soil), such as by detecting whether tools 40 are raised or lowered (e.g., lowered to cutting depth), for instance, by detecting a distance between frame 28 and the surface of the field, or by detecting an angular displacement of wheels 30 relative to frame 28, or in other ways. Operation status sensors 344 can include displacement sensors (e.g., transducers, Hall effect sensors, etc.) that detect a displacement of an actuator or a displacement of one component of machine 100 relative to another component of machine 100. Operation status sensors 344 can include time of flight sensors (e.g., lidar, radar, ultrasonic, etc.) that detect a distance between a component of machine 100 relative to the surface of the worksite. Operation status sensor can include sensors that detect an operator input or control system output that controls the material application machine 100 to perform a sub-operation, for instance, an operator input or control system output that control the tools to be raised or lowered. Operation status sensors 344 can include a variety of other sensors. It may be suitable to perform a material application rate calibration operation while the machine 100 is traveling but not actively performing one or more given sub-operations, such as during a headland turn, or while traveling from one location to another location.

Weight sensors 345 illustratively detect weight of material in one or more material tanks (e.g., 12, 14, 16, 18, or 202, 204, 206, 208, etc.) of material application machines. In one example, a set of one or more weight sensors 345 are assigned to each of a plurality of material tank, each set detecting the weight of material in the assigned tank and generating sensor data indicative of the weight of the material in the assigned tank. The sensor data generated by each set can be aggregated to calculate a total weight of material carried by the material application machine. In one example, weight sensors 345 can include load cells. In another example, weight sensors 345 can include scales. In another example, weight sensors 345 can include any of a variety of other sensors operable to detect weight. In one example, weight sensors 345 are similar to weight sensors 45 shown in FIGS. 3-4.

Meter actuation sensors 346 illustratively detect meter actuation values, indicative of actuation of meters (e.g., 24 or 212, etc.) of material application machine 100. The meter actuation values can be meter speed values or meter displacement values. Meter actuation sensors 346 can detect a speed (e.g., of rotation) or frequency of movement of an actuator (e.g., drive, motor, etc.) used to drive each meter. Meter actuation sensors 346 can include sensors that detect a speed or frequency of movement of an output (e.g., shaft) of the meter actuator. Meter actuation sensors 346 can include sensors that detect an input to the meter actuator, such as a current (e.g., voltage, amperage, etc.) or control signal, used to control the actuation of a meter. Meter actuation sensors 346 can include an encoder. These are merely some examples. Meter actuation sensors 346 can include various other sensors suitable to detect meter actuation.

Blower sensors 347 illustratively detect a speed of the fans (or blowers) of the material application machine 100. Blower sensors 347 can include magnets, proximity sensors, Hall Effect sensors, to count revolution of the blades of a fan, or of a drive shaft used to cause rotation of the blades, or another part of the fan. These are merely some examples. Blower sensors 347 can include various other sensors suitable to detect fan (or blower) speed.

Tank pressure sensors 348 illustratively detect a pressure (air pressure) of each of one or more material tanks (e.g., 12, 14, 16, 18, or 202, 204, 206, 208, etc.). Tank pressure sensors 348 are disposed, at least partially, in the one or more material tanks. Tank pressure sensors 348 can include piezoresistive pressure sensors, capacitive pressure sensors, strain gauges, piezoelectric pressure sensors, optical pressure sensors, or any other sensors suitable to detect a pressure (air pressure) of the one or more tanks.

Material level sensors 349 illustratively detect a level (or volume) of the material the one or more material tanks (e.g., 12, 14, 16, 18, or 202, 204, 206, 208, etc.). Material level sensors 349 can be disposed, at least partially, within each of the one or more tanks (e.g., at the top of the tanks) to detect a level (or volume) of the material in the one or more tanks. Material level sensors 349 can include ultrasonic sensors, lidar, radar, 2D or 3D cameras, an auto-focus camera (where the auto-focus output is used to determine the distance from the camera to the top of the material pile), or any other sensors suitable to detect a level (or volume) of material in a tank. In one example, material level sensors 349 are similar to material level sensors 49 shown in FIG. 3.

It will be understood that sensor data generated material weight sensors 345 and sensor data generated material level sensors 349 can together, or separately, indicate a quantity of material in the one or more material tanks and thus, can be used to determine a quantity of material in the one or more tanks. Thus, each of sensor data generated by weight sensors 345 and sensor data generated by material level sensors 349 can be referred to as material quantity sensor data. Material weight sensors 345 and material level sensors 349 can thus be called material quantity sensors. Thus, material quantity sensors can be used to refer to material weight sensors 345 or material level sensors 349, or both.

A material application machine 100 can include one or more of a variety of other sensors 328 that detect a variety of other characteristics.

Controllable subsystems 316 can include one or more actuators 354 and can include other items 356 as well. Actuators 354 are controllable to activate or deactivate components (or functionality) of a material application machine 100 or to adjust operation of a material application machine 100 or of different components (or functionality) of a material application machine 100, or both. Actuators 354 can include any of a variety of different types of actuators, such as hydraulic actuators, pneumatic actuators, electrical actuators, electromechanical actuators, as well as various other actuators. Actuators 354 can include engines, motors, pumps, cylinders (hydraulic, pneumatic, etc.), linear actuators, as well as various other mechanisms. As previously discussed, actuators 354 can be controlled to adjust operation of different components of a material application machine 100, such as the actuation (e.g., speed of rotation, displacement, etc.) of different components of a material application machine 100 (e.g., the actuation of one or more meters (e.g., 24 or 212) , direction of movement (e.g., direction of rotation, etc.), of different components of a mobile work machine, position (e.g., height above ground, depth into ground, position relative to another component of the mobile work machine, etc.) of different components of a material application machine 100, orientation (e.g., roll, pitch, yaw) of different components of a material application machine 100, as well as various other operating parameters of different components of a material application machine 100. Similarly, actuators 354 can be controlled to adjust operation of a material application machine 100, itself, such as adjusting the travel speed of a material application machine 100 or adjusting a travel direction (heading) of a material application machine 100.

Control system 314 can include one or more controllers 334, material application rate calibration system 335, and can include various other items 337. Controllers 334 illustratively generate control signals to control controllable subsystems 316, other items of material application machine 100 (e.g., operator interface mechanisms 318, communication system 306, etc.), or other items of system 300 (e.g., user interface mechanisms 364). Some subsystems 316 can have a dedicated controller 334 (e.g., an actuator 354, or a set of similar actuators 354, can have a corresponding controller 334). In some instances, a controller 334 can control a plurality of the controllable subsystems 316 (e.g., one controller 334 can control a plurality of different actuators 354). Controllers 334 can generate control signals based on various data, including, as will be discussed in more detail below, based on one or more images selected by image selection system 210. In one example, controllers 334 comprise electronic control units (ECUs).

Communication system 306 is used to communicate between components of a material application machine 100 or with other items of system 300, such as other mobile material application machines 370, remote computing systems 400, and user interface mechanisms 364. Communication system 406 is used to communicate between components of a remote computing system 400 or with other items of system 300, such as other remote computing systems 400, material application machine 100, other material application machines 370, and user interface mechanisms 364. Communication systems 306 and 406 can each include one or more of wired communication circuitry and wireless communication circuitry, as well as wired and wireless communication components. In some examples, communication systems 306 and 406 can each be a cellular communication system, a system for communicating over a wide area network or a local area network, a system for communicating over a controller area network (CAN), such as a CAN bus, a system for communication over a near field communication network, or a communication system configured to communicate over any of a variety of other networks, or any combination of such systems. Communication systems 306 and 406 can each also include a system that facilitates downloads or transfers of information to and from a secure digital (SD) card or a universal serial bus (USB) card, or both. Communication systems 306 and 406 can each utilize networks 359. Networks 359 can be any of a wide variety of different types of networks such as the Internet, a cellular network, a wide area network (WAN), a local area network (LAN), a controller area network (CAN), a near-field communication network, or any of a wide variety of other networks, or any combination of such networks.

FIG. 5 shows that one or more operators 360 may operate material application machine 100 and interact with other items of system 300, such as other material application machines 370, remote computing systems 400, and user interface mechanisms 364, through operator interface mechanisms 318. In some examples, operator interface mechanisms 318 may include joysticks, levers, a steering wheel, linkages, pedals, buttons, wireless devices (e.g., mobile computing devices, etc.), dials, keypads, an interface display device (e.g., display screen), actuatable elements (such as icons, buttons, etc.) on a interface display device, a microphone and speaker (where speech recognition and speech synthesis are provided), among a wide variety of other types of interface mechanisms. Where a touch sensitive display system is provided, the operators 360 may interact with operator interface mechanisms 318 using touch gestures. These examples described above are provided as illustrative examples and are not intended to limit the scope of the present disclosure. Consequently, other types of operator interface mechanisms 318 may be used and are within the scope of the present disclosure.

FIG. 5 also shows remote users 366 may interact with items of system 300, such as other material application machines 370, remote computing systems 400, and user interface mechanisms 364, through user interface mechanisms 364. In some examples, user interface mechanisms 364may include joysticks, levers, a steering wheel, linkages, pedals, buttons, wireless devices (e.g., mobile computing devices, etc.), dials, keypads, an interface display device (e.g., display screen), actuatable elements (such as icons, buttons, etc.) on a interface display device, a microphone and speaker (where speech recognition and speech synthesis are provided), among a wide variety of other types of interface mechanisms. Where a touch sensitive display system is provided, the users 366 may interact with user interface mechanisms 364using touch gestures. These examples described above are provided as illustrative examples and are not intended to limit the scope of the present disclosure. Consequently, other types of user interface mechanisms 364 may be used and are within the scope of the present disclosure.

Remote computing systems 400 can be a wide variety of different types of systems, or combinations thereof. For example, remote computing systems 400 can be in a remote server environment. Further, remote computing systems 400 can be remote computing systems, such as mobile devices, a remote network, a farm manager system, a vendor system, or a wide variety of other remote systems.

Material application rate calibration system 335, generally, determines whether conditions are suitable to perform material application rate calibration operation, performs material application rate calibration operations, determines (diagnoses) causes for material application rate error, and generates various other outputs. The outputs of material application rate calibration system 335 can be utilized in machine control, such as in the control of material application machine 100. The outputs of material application rate calibration system 335 can also be provided for presentation (e.g., display, etc.), such as presentations indicative of or based on the outputs. Material application rate calibration system 335 will be discussed in more detail below.

While the example shown in FIG. 5 illustrates items being distributed across worksite operation system 300 in a particular way, in other examples, one or more of the items shown in FIG. 5 can be, alternatively or additionally, located elsewhere or can be distributed across multiple locations. For example, material application rate calibration system 335 can, alternatively or additionally, be located on one or more remote computing systems 400. In another example, material application rate calibration system 335 can be distributed across multiple locations, such as across both material application machine 100 and remote computing systems 400. It will also be understood that other material application machines 370 can include a material application rate calibration system similar to material application rate calibration system 335. Thus, it will be understood that the items in worksite operation system 300 can be distributed in various ways, including ways that differ from the example shown in FIG. 5.

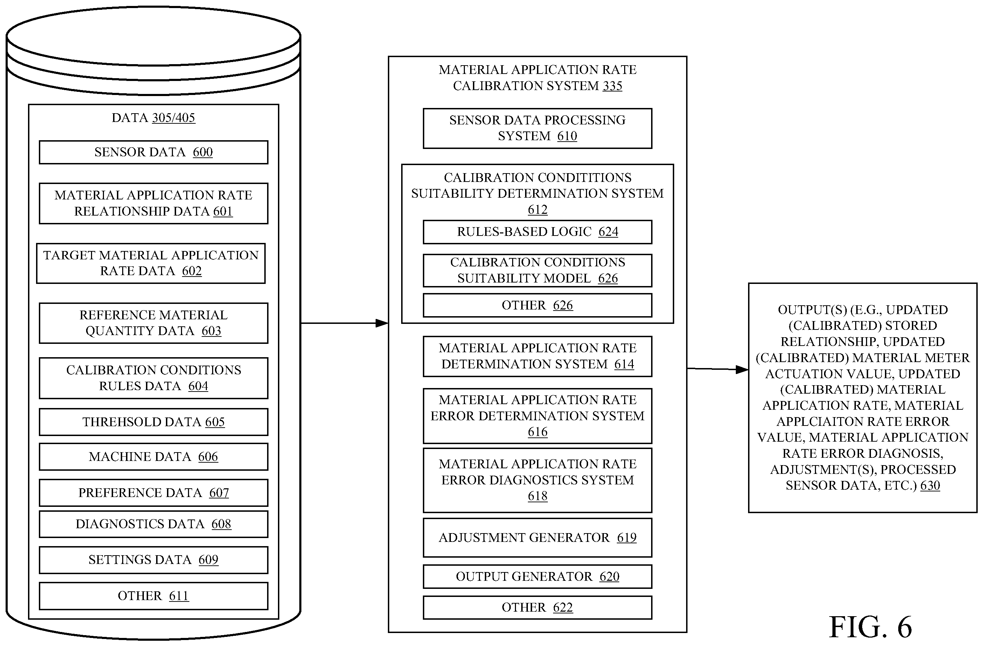

FIG. 6 is a block diagram of portions of system 300, including material application rate calibration system 335 (also referred to herein as calibration system 335), shown in FIG. 5, in more detail. FIG. 6 also shows the information flow among the various components shown. As illustrated, calibration system 335 obtains (e.g., retrieves or receives) one or more of data 305 and 405 and generates outputs 630 based thereon. The one or more outputs 630, which can include an updated (calibrated) stored relationship, an updated (calibrated) material meter actuation value (e.g., updated (calibrated) material meter speed value, updated (calibrated) material meter displacement value, etc.), an updated (calibrated) material application rate, a material application rate error value, material application rate error diagnosis, adjustment(s), processed sensor data (e.g., values), as well as various other items or information, can be provided to other items of system 300 and can be used to control various items of system 300.

Data 305 or data 405, or both, can include sensor data 600, material application rate relationship data 601, target material application rate data 602, reference material quantity data 603, calibration condition rules 604, threshold data 605, machine data 606, preference data 607, diagnostics data 608, settings data 609, and any of a variety of other data 611, including, but not limited to, other data described herein.

Sensor data 600 include sensor data generated by sensors 308. Sensor data 600 can include geographic position sensor data generated by geographic position sensors 303, heading sensor data generated by heading sensors 325, calibration conditions sensor data generated by calibration conditions sensors 340, weight sensor data (or material quantity sensor data) generated by weight sensors 345, meter actuation sensor data generated by meter actuation sensors 346, blower sensor data generated by blower sensors 347, tank pressure sensor data generated by tank pressure sensors 348, material level sensor data (or material quantity sensor data) generated by material level sensors 349, as well as various other sensor data generated by other sensors 328. Calibration conditions sensor data can include turn status sensor data generated by turn status sensors 341, ground level (or machine stability) sensor data generated by ground level sensors 342, speed sensor data generated by speed sensors 343, operation status sensor data generated by operation status sensors 344, and other calibration conditions sensor data generated by other calibration conditions sensors 350. It will be understood that sensor data can be in the form of signals, images, or any other outputs of a sensor indicative of detected characteristics.

Material application rate relationship data 601 describe a relationship between material application rate, material meter actuation (e.g., material meter speed, material meter displacement, etc.), and machine travel speed. Material application rate relationship data 601 can be in the form of a look-up table, an equation, a function, a control mapping, as well as various other relationships. Target material application rate data 602 comprise target material application rates used to control machine 100 (i.e., are the target material application rates that the machine 100 attempts to achieve). Target material application rate data 602 can be provided by an operator or user, can be the output of a control system (e.g., 314), can be derived from a prescription map, or can be derived from other sources.

Reference material quantity data 603 can comprise reference material quantity values corresponding to a quantity (e.g., weight, volume, level, etc.) of material in the tanks of the material application machine 100. In some examples, reference material quantity data 603 can comprise previously determined material quantities based on sensor data generated by weight sensors 345 or based on sensor data generated by level sensors 349. In some examples, reference material quantity data 603 can comprise operator or user input material quantity values corresponding to a quantity of material in the tanks of the material application machine. In one example, reference material quantity data 603 can comprise weight values corresponding to a weight of material in the tanks of the material application machine 100. In some examples, reference material quantity data 603 can comprise previously determined weights based on sensor data generated by weight sensors 345. In some examples, reference material quantity data 603 can comprise operator or user input weight values corresponding to a weight of material in the tanks of the material application machine 100. In one example, reference material quantity data 603 can comprise material level or volume values corresponding to a level or volume of material in the tanks of the material application machine 100. In some examples, reference material weight data 603 can comprise previously determined material levels or volumes based on sensor data generated by level sensors 349. In some examples, reference material quantity data 603 can comprise operator or user input material level or volume values corresponding to a level or volume of material in the tanks of the material application machine 100.

Calibration condition rules data 604 comprise rules for determining condition suitability for a material application rate calibration operation. The calibration rules data 604 can comprise thresholds, yes-no requirements, if -then requirements, as well as other types of rules. Generally, calibration condition rules data 604 comprise rules that, depending on the input, describe whether or not conditions are suitable for a material application rate calibration.

Threshold data 605 comprise threshold values (or levels) that may be used in operation of machine 100, or system 300. One example of a threshold is a material application rate error threshold that describes an acceptable material application rate error (or error range).

Machine data 606 comprise data relative to material application machine 100, such as machine configuration data (model, type, ratings, etc.), machine dimension information (e.g., swath width, applicator (e.g., row unit, etc.) spacing, application area, etc.), as well as various other machine data.

Preference data 607 comprise operator or user preferences. One example, of an operator or user preference, is a user or operator preference that is used to determine operation of material application rate calibration system 335, as will be described later.

Diagnostics data 608 comprise data describing possible causes of material application rate error as well as additional symptoms of those causes. Some such examples include insufficient tank pressurization (e.g., due to open door of tank, etc.), improper fan speed, travel speed variability, low material level, as well as various others.

Settings data 609 comprise various settings of material application machine 100, for example, but not by limitation, tank pressure settings, fan (or blower) speed settings, as well as a variety of other settings. Settings data 609 can be provided by an operator or user, can be the output of a control system (e.g., 314), can be derived from a prescription map, or can be derived from other sources. As shown in FIG. 6, material application rate calibration system 335 include sensor data processing system 610, calibration condition suitability determination system 612, material application rate determination system 614, material application rate error determination system 616, material application rate error diagnostics system 618, adjustment generator 619, output generator 620, and can include various other items or functionality, or both, 622. Calibration condition suitability determination system 612, itself, can include rules-based logic 624, calibration conditions suitability model 626, and various other items or functionality 628, as well.

Sensor data processing system 610 processes sensor data 600 to generate processed sensor data, the processed sensor data including values (e.g., computer readable values) corresponding to the detected characteristics. Sensor data processing system 610 illustratively generates processed sensor data including geographic position values based on sensor data generated by geographic position sensors 303, heading values based on sensor data generated by heading sensors 325, calibration conditions values based on sensor data generated by calibration conditions sensors 340, weight values based on sensor data generated by weight sensors 345, meter actuation values based on sensor data generated by meter actuation sensors 346, blower values based on sensor data generated by blower sensors 347, tank pressure values based sensor data generated by tank pressure sensors 348, material level values or material volume values based on sensor data generated by material level sensors 349, as well as various other values based on sensor data generated by other sensors 328. Calibration conditions values can include turn status values based on sensor data generated by turn status sensors 341, ground level (or machine stability) values sensor data generated by ground level sensors 342, speed values based on sensor data generated by speed sensors 343, operation status values based on sensor data generated by operation status sensors 344, and other calibration conditions values based on sensor data generated by other calibration conditions sensors 350.

Sensor data processing system 610 can include various sensor data processing functionalities, including, analog-to-digital converters, image processing, color extraction, pixel analysis, filtering, aggregation, normalization, categorization, as well as various other sensor data processing functionalities.

Calibration condition suitability determination system 612 determines whether conditions are suitable for a material application rate calibration operation based on sensor data 600 (or processed sensor data), specifically, calibration conditions sensor data (or processed calibration conditions values), such as turn status sensor data (or turn status values), ground level (or machine stability) sensor data (or ground level (or machine stability) values, speed sensor data (or speed values), operation status sensor data (or operation status values), and other calibration conditions sensor data (or other calibration conditions values). It will be understood that the turn status values can be yaw rate values, that ground level (or machine stability) values can be machine pitch and roll values as well as machine bouncing (e.g., movement (reciprocal movement)) values, that speed values can be travel speed values or acceleration/deceleration values, or both, and that operation status values can be binary values indicating whether machine 100 is actively performing a sub-operation (e.g., tilling, seeding, etc.) such as binary values indicating whether the tools are in the ground or out of the ground (e.g., 1=in-ground, 0=out of ground, etc.) or operation status values can be tool position values.

In one example, calibration condition suitability determination system 612 utilizes rules-based logic 624 which determines suitability of the conditions based on the input calibration condition values and calibration condition rules (as indicated by data 604). The calibration condition rules may indicate threshold values or acceptable ranges for the calibration condition values and further indicate a number of the calibration conditions that must be in acceptable range or acceptable relative to the corresponding threshold or may further indicate combinations of the calibration conditions that must be in acceptable range or acceptable relative to the corresponding threshold in order to perform a material application rate calibration operation.

In one example, calibration condition suitability determination system 312 utilizes a calibration conditions suitability model 626 that receives, as model inputs, the calibration conditions values and generates, as a model output, a value (or other metric) indicative of whether conditions are suitable for a material application rate calibration operation. In one example, model 626 is machine learning, or artificial intelligence, model, such as a neural network. Model 626 can be trained on historical operations data including historical calibration conditions values and indications (yes or no) of whether a reliable material quantity (e.g., weight, level, volume, etc.) was measured in the calibration conditions while the machine was on the move. Thus, the features can be the calibration conditions values and the labelled data (data to be predicted) can be the indication of whether a reliable material quantity measurement could be gathered. The model 626 can iteratively repeat learning on the training data, adjusting model parameters (e.g., weight, biases, etc.) with each iteration, until convergence (e.g., until the model output error no longer reduces or until the model output error is satisfactory).

It will be understood that the model 626 can continue to learn based on subsequent operation data (e.g., calibration conditions values and indications of reliable material quantity measurements corresponding to subsequent operation(s)).

Material application rate determination system 614 determines, in response to determined suitability by calibration condition suitability determination system 612 and a control signal to initiate a material application rate calibration operation (e.g., a control signal from control system 314, or another item of system 300), a calibrated (or updated) material application rate based on an indication of the quantity of material in the one or more material tanks (as derived from sensor data 600 (e.g., material quantity sensor data (e.g., weight sensor data, level (or volume) sensor data, etc.) and material quantity values (e.g., weight values, level (or volume) values, etc.)), by way of sensor data processing system 610), based on a reference material quantity (as obtained from reference material quantity data 603), and based on an indication of area travelled/covered by the machine 100 since the time of the reference material quantity (as derived from sensor data 600 (e.g., speed sensor data and speed values or geographic position sensor data and geographic position values, as well as machine data 606 (e.g., machine dimensions, etc.)). Generally, the difference between the measured material quantity, at the time of the calibration operation, and the reference material quantity will provide a value (based on a difference) indicative of an amount (e.g., pounds) of material applied by the machine since the time corresponding to the reference value, and the indication of the area travelled/covered (e.g., acres) can be used, in combination, with the amount of material applied to calculate a calibrated (or updated) material application rate (e.g., pounds per acre).

Material application rate error determination system 616 determines the material application rate error of machine 100 based on a comparison of the calibrated (or updated) material application rate (e.g., pounds per acre) generated by material application rate determination system 614 to a target material application rate (as derived from target material application rate data 602). Material application rate error determination system 616 can output, as an error value (or error metric) a difference value indicative of the difference between the calibrated (or updated) material application rate and the target material application rate. The difference value could be plus or minus a given number of amount per area (e.g., pounds per acre), such as "plus (or "+") 5 pounds per acre (or lbs./acre)" or "minus (or "-") 5 pounds per acre (or lbs./acre)". In another example, the difference value could be expressed as a percentage, for instance, where the target material application rate was 30 pounds per acre and the calibrated (or updated) material application rate (e.g., the material application rate produced by the machine) was 28.5, the difference value could be "5%" or "-5%" or "95%". Additionally, of course, it will be understood that the target material application rate and the calibrated (or updated) material application rate can also be output. Material application rate error diagnostics system 618 diagnoses cause(s) of the material application rate error of machine 100. Material application rate error diagnostics system 618 can diagnose the cause(s) based on sensor data 600 (or processed sensor data generated by system 610) and based on diagnostics data 608. For example, material application rate error diagnostics system 618 can determine that a cause is erroneous pressurization of one or more tanks (e.g., too low due to one or more tank doors being open, or too high, etc.) based on sensor data 600 (tank pressure sensor data and tank pressure values), diagnostics data 608, and, in some examples, based further on settings data 609 indicating the tank pressure setting. Incorrect tank pressurization can cause undesired variance in the material application rate. In another example, material application rate error diagnostics system 618 can determine that a cause is erroneous speed of one or more blowers (or fans) (e.g., too low or too high due) based on sensor data 600 (blower sensor data and blower sensor values), diagnostics data 608, and in some examples, based further on settings data 609 indicting speed settings of the one or more blowers (or fans). An erroneous blower (or fan) speed can cause undesired variance in the material application rate. In another example, material application rate error diagnostics system 618 can determine that a cause is too much travel speed variability (machine changed travel speed too often or too much, or both) based on sensor data (speed sensor data and speed values) and diagnostics data 608 and, in some examples, based further on settings data 609 indicating the travel speed setting(s). Too much variance in travel speed (whether in frequency or amount) can cause undesired variance in material application rate due to latency of control of the material meters, which are controlled based on the travel speed. In another example, material application rate error diagnostics system 618 can determine that a cause is the material level (or tank level) of the one or more tanks (e.g., tank level is low) based on sensor data (tank level sensor data and tank level values) and diagnostics data 608. When tank levels are low (e.g., relative to a threshold 605) undesired variance in material application rate can occur. It will also be understood that, in other examples, material application rate error diagnostics system 618 can determine a combination of the above as causes. In another example, material application rate error diagnostics system 618 can determine that the cause is an error of the stored material application rate relationship (as provided by data 601), for instance, based on lack of diagnosis of incorrect tank pressurization, speed variability, or tank level as the cause or causes.

Adjustment generator 619 generates one or more adjustments based on material application rate error value or the material application rate error diagnosis, or both. For instance, where the error diagnosis indicates that the fault lies with incorrect tank pressurization, adjustment generator 619 may generate, as an adjustment, an output message to indicate that the tank pressure is erroneous, and, perhaps, an adjustment recommendation (e.g. "CHECK TANK DOOR"). In another example, where the error diagnosis indicates that the fault lies with erroneous blower (or fan) speed, adjustment generator 619 may generate, as an adjustment, an output message to indicate that blower (or fan speed) is erroneous, and perhaps, an adjustment recommendation (e.g., "ADJUST BLOWER (OR FAN) SPEED" or "BLOWER (OR FAN) MAINTENANCE NEEDED").

Additionally, or alternatively, in some examples, adjustment generator 619 may output a blower (or fan) speed setting. In another example, where the error diagnosis indicates that the fault lies with travel speed variability, adjustment generator 619 may generate, as an adjustment, an output message to indicate that there is too much travel speed variability, and, perhaps, an adjustment recommendation (e.g., "REDUCE SPEED VARIABILITY" or "MAINTAIN CONSTANT SPEED"). Additionally, or alternatively, in some examples, adjustment generator 619 may output a travel speed setting. In another example, where the error diagnosis indicates that the fault lies with material level, adjustment generator 619 may generate, as an adjustment, an output message to indicate that tank level is too level, and, perhaps, an adjustment recommendation (e.g., "TANK LEVEL (TOO) LOW" or "FILL TANK"). Additionally, or alternatively, in some examples, adjustment generator 619 may output a material meter actuation setting (e.g., material meter speed or material meter displacement setting) or a tank pressure setting, or both, to counteract the effects of a low tank level. Where the error diagnosis indicates that the fault lies with the stored material application rate relationship (or the material meter actuation value commanded by the stored material application relationship), adjustment generator can output a calibrated (or updated) material meter actuation value (e.g., speed value or displacement value) to counteract the error and can further generated a calibrated (or updated) stored material application rate relationship (which consequently adjusts data 601). Even where the diagnosis indicates that the root cause of the error is not the stored material application rate relationship (e.g., the cause is one or more of tank pressure, blower (or fan) speed, travel speed variability, material level, and another cause), adjustment generator 619 may output a calibrated (or updated) material meter actuation value (e.g., speed value or displacement value) to counteract the error, though may not update the stored relationship (given that the stored relationship is not the cause of the error).

The type of adjustment generated by adjustment generator 619 can depend on operator or user preferences (as indicated by preference data 607). For instance, the operator or user may prefer that adjustment generator 619 merely provide a message (for presentation) and a suggested adjustment (for operator or user authorization). In another example, the operator or user may prefer that adjustment generator 619 institute the adjustment and provide a message (for presentation) indicating the error and the adjustment. Additionally, whether an adjustment is made to the material meter actuation value or the stored material application rate relationship, or both, may depend on a threshold 605, such as a threshold material application rate error value. For instance, where the material application rate error value is within (e.g. at or less than, or both) the threshold material application rate error value, then it may be that neither the material meter actuation value nor the stored relationship are updated (calibrated). In some examples, only a message indicating the error, and other information (e.g., cause(s), etc.) may be provided by adjustment logic 619. The threshold material application rate error value may be provided by an operator or user or by a manufacturer, or in other ways.

Output generator 620 generates one or more outputs 630 which can include one or more of an updated (calibrated) stored material application rate relationship, an updated (calibrated) material meter actuation value, an updated (calibrated) material application rate, a material application rate error value, a material application rate error diagnosis, adjustment(s), and processed sensor data (e.g., values), as well as other items and information.

The one or more outputs 630 can be provide to one or more items of system 300. For example, the one or more outputs 630 can provided to control system 314 which can control various items of machine 100, including to control one or more controllable subsystems 316, operator interface mechanisms 318 (e.g., to present (e.g., display, etc.) information indicative of or based on the one or more outputs 630), and communication system 306 (e.g., to communicate the one or more outputs 630 over networks 359 to other items (e.g., remote computing systems 400, other machines 370, user interface mechanisms 364, etc.) of system 300. In examples where system 335 is located on remote computing systems 400, the one or more outputs 630 can be provided (via communication system 406) to machine 100 over networks 359 and machine 100 (e.g., control system 314) can operate to control various items, such as to control one or more controllable subsystems 316, operator interface mechanisms 318, and communication system 306 based on the one or more outputs 630. Alternatively, in such an example (where system 335 is located at remote computing systems 400), the one or more outputs 630 may be provided to other items (e.g., other machines 370, user interface mechanisms 364, etc.) over networks 359 via communication system 406, rather than over networks 359 via communication system 306. It will be understood that the interface mechanisms 364 can generate presentations (e.g., displays, etc.) indicative of or based on the one or more outputs 630.

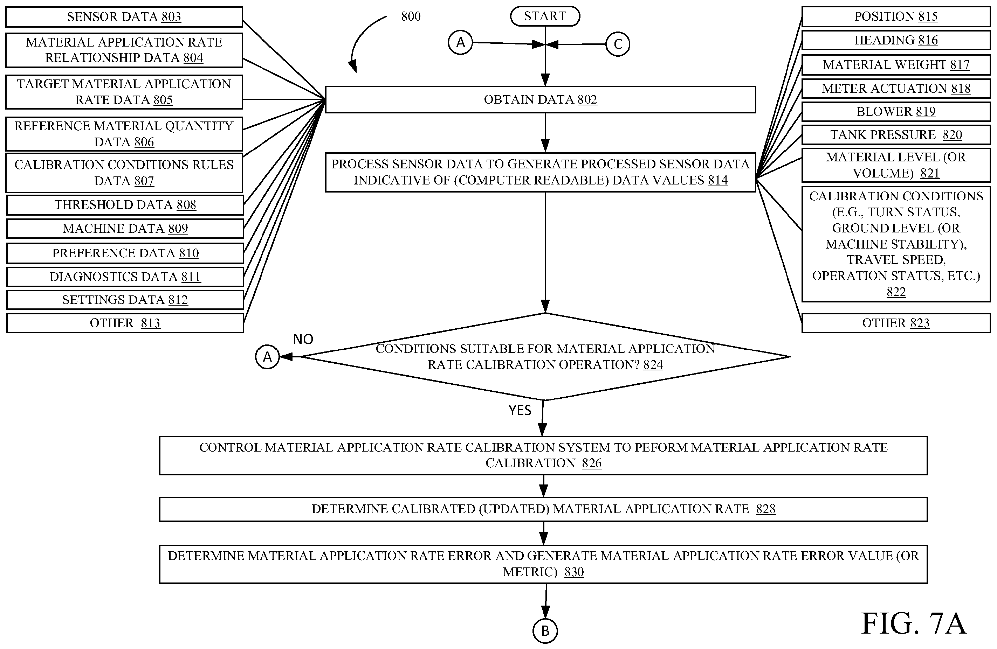

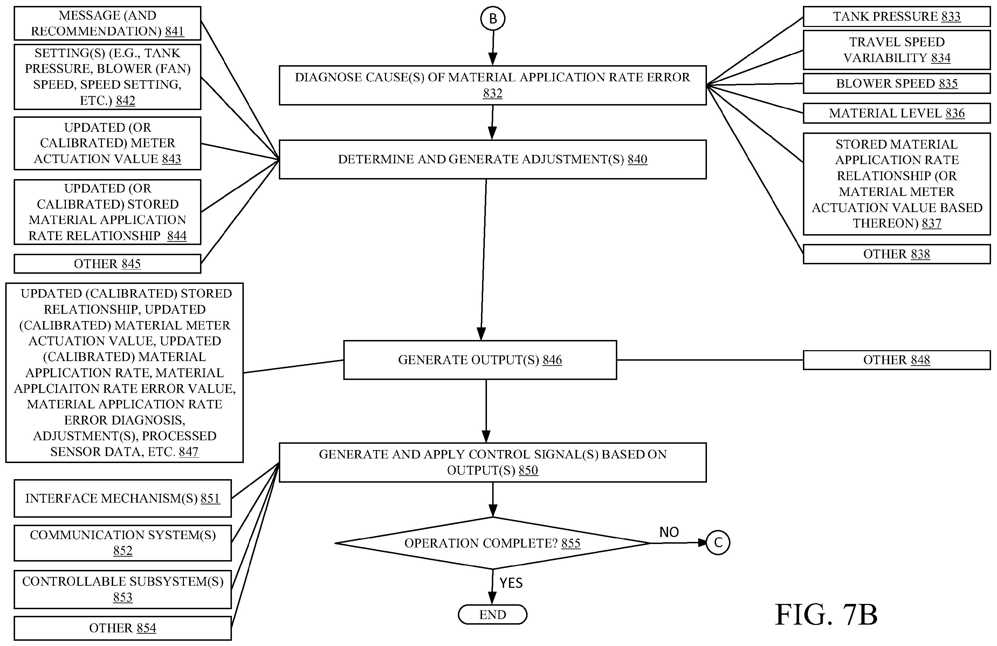

FIG. 7A-7B (collectively referred to herein as FIG. 7) is a show a flowchart illustrating one example operation 800 of system 300 in performing a material application rate calibration operation and control.

At block 802, system 300 (e.g., material application rate calibration system 335) obtains (e.g., receives or retrieves) various data. As indicated by block 803, the obtained data can include sensor data 600. As indicated by block 804, the obtained data can include material application rate relationship data 601. As indicated by block 805, the obtained data can include target material application rate data 602. As indicated by block 806, the obtained data can include reference material quantity data 603. As indicated by block 807, the obtained data can include calibration conditions rules data 604. As indicated by block 808, the obtained data can include threshold data 605. As indicated by block 809, the obtained data can include machine data 606. As indicated by block 810, the obtained data can include preference data 607. As indicated by block 811, the obtained data can include diagnostics data 608. As indicated by block 812, the obtained data can include settings data 609. As indicated by block 813, the obtained data can include various other data 611.

At block 814, system 300 (e.g., sensor data processing system 610) processing system 610 processes the sensor data 600 to generate processed sensor data comprising computer readable data values. As indicated by block 815, the processed sensor data can include geographic position values. As indicated by block 816, the processed sensor data can include heading values. As indicated by block 817, the processed sensor data can include material weight values. As indicated by block 818, the processed sensor data can include material meter actuation values. As indicated by block 819, the processed sensor data can include blower (or fan) values. As indicated by block 820, the processed sensor data can include tank pressure values. As indicated by block 821, the processed sensor data can include material level or volume values. As indicated by block 822, the processed sensor data can include calibration conditions values, such as turn status values, ground level (or machine stability) values, travel speed values, operation status values, and other calibration conditions values. As indicated by block 823, the processed sensor data can include various other, such as various other values derived from sensor data generated by other sensors 328.

At block 824, system 300 (e.g., calibration conditions suitability determination system 612) determines whether conditions are suitable to perform a material application rate calibration operation. System 300 can determine whether conditions are suitable to perform a material application rate calibration operation based on calibration conditions sensor data 600 (or processed calibration conditions sensor data (e.g., calibration conditions values)) and additionally based on (utilizing rules-based logic 624) calibration conditions rules (as indicated by calibration conditions rules data 604) or additionally based on calibration conditions suitability model 626.

If, at block 824, it is determined that conditions are not suitable to perform a material application rate calibration operation, then processing returns to block 802. If, at block 824, it is determined that conditions are suitable to perform a material application rate calibration operation, then processing proceed to block 826.

At block 826, system 300 (e.g., material application rate calibration system 335) is controlled to perform a material application rate calibration operation.

At block 828, system 300 (e.g., material application rate determination system 614) determines a calibrated (or updated) material application rate for machine 100 based on an indication of the quantity (e.g., weight, level, volume, etc.) of material in the one or more material tanks (as derived from sensor data 600 (e.g., material quantity sensor data (e.g., weight sensor data, level (or volume) sensor data, etc.) and material quantity values (e.g., weight values, level (or volume) values, etc.)), by way of sensor data processing system 610), based on a reference material quantity (as obtained from reference material quantity data 603), and based on an indication of area travelled/covered by the machine 100 since the time of the reference material quantity (as derived from sensor data 600 (e.g., speed sensor data and speed values or geographic position sensor data and geographic position values, as well as machine data 606 (e.g., machine dimensions, etc.)). Generally, the difference between the measured material quantity, at the time of the calibration operation, and the reference material quantity will provide a value (based on a difference) indicative of an amount (e.g., pounds) of material applied by the machine since the time corresponding to the reference value, and the indication of the area travelled/covered (e.g., acres) can be used, in combination, with the amount of material applied to calculate a calibrated (or updated) material application rate (e.g., pounds per acre).

At block 830, system 300 (e.g., material application rate error determination system 616) determines a material application rate error value of machine 100 based on a comparison of the calibrated (or updated) material application rate (e.g., pounds per acre) to a target material application rate (as derived from target material application rate data 602). System 300 can output, as an error value (or error metric) a difference value indicative of the difference between the calibrated (or updated) material application rate and the target material application rate. The difference value could be plus or minus a given number of amount per area (e.g., pounds per acre), such as "plus (or "+") 5 pounds per acre (or lbs./acre)" or "minus (or "-") 5 pounds per acre (or lbs./acre)". In another example, the difference value could be expressed as a percentage, for instance, where the target material application rate was 30 pounds per acre and the calibrated (or updated) material application rate (e.g., the material application rate produced by the machine) was 28.5, the difference value could be "5%" or "-5%" or "95%". Additionally, of course, it will be understood that the target material application rate and the calibrated (or updated) material application rate can also be output.

At block 832, system 300 (e.g., material application rate error diagnostics system 618) determines the cause(s) of the material application rate error, based on sensor data (or processed sensor data) and based on diagnostics data 608 and, in some instances, settings data 609. As indicated by block 833, system may determine that tank pressure is a cause. As indicated by block 834, system 300 may determine that travel speed variability is a cause. As indicated by block 835, system 300 may determine that blower (or fan) speed is a cause. As indicated by block 836, system 300 may determine that material level is a cause. As indicated by block 837, system 300 may determine that the stored material application rate relationship (as indicated by data 601), or the material meter actuation value (e.g., meter speed value or meter displacement value) based on the stored relationship is a cause. As indicated by block 838, system 300 can determine one or more other cause(s), including a combination of the above-mentioned causes. The operation of system 300 (e.g., material application rate error diagnostics system 618) was previously discussed in more detail with reference to FIG. 6.

At block 840, system 300 (e.g., adjustment generator 619) determines and generates one or more adjustments based on the error diagnosis and, in some examples, based on other data such as threshold data 605 or preference data 607, or both. As indicated by block 841, system may generate, as an adjustment, an error cause message, which may also include, an adjustment recommendation. Such examples were previously described in more detail with reference to FIG. 6. As indicated by block 842, an adjustment may additionally, or alternatively, include one or more settings, such as a tank pressure setting, a blower (or fan) speed setting, a travel speed setting, as well as other settings. Such examples were previously described in more detail with reference to FIG. 6. As indicated by block 843, an adjustment may additionally, or alternatively, include an updated (calibrated) meter actuation value (e.g., updated (calibrated) meter speed value or updated (calibrated) meter displacement value). Such examples were previously described in more detail with reference to FIG. 6. As indicated by block 844, an adjustment may additionally, or alternatively, include an updated (or calibrated) stored material application rate relationship. Such examples were previously described with reference to FIG. 6. As indicated by block 845, adjustment generator 619 can generate a variety of other adjustments, including, but not limited to, a combination of the above-mentioned. Additionally, as previously described with reference to FIG. 6, the adjustment(s) may depend on user or operator preferences (as indicated by preference data 607) or based on threshold data 605 (e.g., material application rate error threshold, etc.), or both.

At block 846, system 300 (e.g., output generator 620) generates one or more outputs 630. As indicated by block 847, the one or more outputs 630 updated (calibrated) stored material application rate relationship, an updated (calibrated) material meter actuation value, an updated (calibrated) material application rate, a material application rate error value, a material application rate error diagnosis, adjustment(s), and processed sensor data (e.g., values). As indicated by block 848, the one or more outputs can include various other items or information, or both.

At block 850, system 300 (e.g., control system 314, etc.) generates and applies one or more control signals to control one or more items of system 300 based on the one or more outputs 630. As indicated by block 851, one or more control signals can be generated to control interface mechanisms (e.g., 318 or 364, or both) to generate presentations (e.g., displays, etc.) based on or indicative of the one or more outputs 630. As indicated by block 852, one or more control signals can be generate to control one or more communication systems (e.g., 306 or 406, or both) to communicate the one or more outputs 630 (or information based on or indicative thereof) to other items of system 300 over networks 359. As indicated by block 853, one or more control signals can be generated to control one or more controllable subsystems 316. This can include controlling one or more actuators 354 to control a travel speed of machine 100 or controlling one or more actuators 354 to control material meter actuation (e.g., speed or displacement), or both. Additionally, or alternatively, this can include controlling one or more actuators 354 to control the speed of one or more blowers (or fans), such as to increase or decrease tank pressure, to match a desired fan setting, etc. These are merely some examples, control signals can be generated to control various other items of system 300 as indicated by block 854.

At block 855, system 300 determines whether the material application operation is complete. If, at block 855, it is determined that the material application operation is not complete, then processing returns to block 802. If, at block 855, it is determined that the material application operation is complete, then processing ends.

The present discussion has mentioned processors and servers. In some examples, the processors and servers include computer processors with associated memory and timing circuitry, not separately shown. They are functional parts of the systems or devices to which they belong and are activated by and facilitate the functionality of the other components or items in those systems. Also, a number of user interface displays have been discussed. The displays can take a wide variety of different forms and can have a wide variety of different user actuatable operator interface mechanisms disposed thereon. For instance, user actuatable operator interface mechanisms may include text boxes, check boxes, icons, links, drop-down menus, search boxes, etc. The user actuatable operator interface mechanisms can also be actuated in a wide variety of different ways. For instance, they can be actuated using operator interface mechanisms such as a point and click device, such as a track ball or mouse, hardware buttons, switches, a joystick or keyboard, thumb switches or thumb pads, etc., a virtual keyboard or other virtual actuators. In addition, where the screen on which the user actuatable operator interface mechanisms are displayed is a touch sensitive screen, the user actuatable operator interface mechanisms can be actuated using touch gestures. Also, user actuatable operator interface mechanisms can be actuated using speech commands using speech recognition functionality. Speech recognition may be implemented using a speech detection device, such as a microphone, and software that functions to recognize detected speech and execute commands based on the received speech.

A number of data stores have also been discussed. It will be noted the data stores can each be broken into multiple data stores. In some examples, one or more of the data stores may be local to the systems accessing the data stores, one or more of the data stores may all be located remote form a system utilizing the data store, or one or more data stores may be local while others are remote. All of these configurations are contemplated by the present disclosure.

Also, the figures show a number of blocks with functionality ascribed to each block. It will be noted that fewer blocks can be used to illustrate that the functionality ascribed to multiple different blocks is performed by fewer components. Also, more blocks can be used illustrating that the functionality may be distributed among more components. In different examples, some functionality may be added, and some may be removed.

It will be noted that the above discussion has described a variety of different systems, generators, models, logic, controllers, components, and interactions. It will be appreciated that any or all of such systems, generators, models, logic, controllers, components, and interactions may be implemented by hardware items, such as one or more processors, one or more processors executing computer executable instructions stored in memory, memory, or other processing components, some of which are described below, that perform the functions associated with those systems, generators, models, logic, controllers, components, or interactions. In addition, any or all of the systems, generators, models, logic, controllers, components, and interactions may be implemented by software that is loaded into a memory and is subsequently executed by one or more processors or one or more servers or other computing component(s), as described below. Any or all of the systems, generators, models, logic, controllers, components, and interactions may also be implemented by different combinations of hardware, software, firmware, etc., some examples of which are described below. These are some examples of different structures that may be used to implement any or all of the systems, generators, models, logic, controllers, components, and interactions described above. Other structures may be used as well.

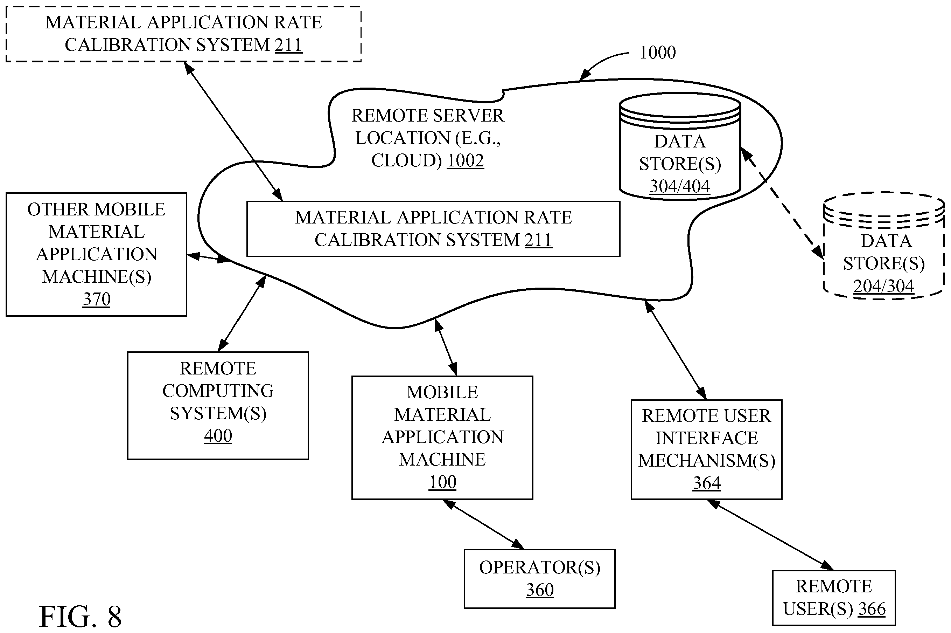

FIG. 8 is a block diagram of a remote server architecture 1000. FIG. 8, also shows material application machine 100, one or more remote computing systems 400, one or more other material application machines 370, and one or more remote user interface mechanisms 364 in communication with the remote server environment. The material application machine 100, remote computing systems 400, other material application machines 370, and remote user interface mechanisms 364 communicate with elements in a remote server architecture 1000. In some examples, remote server architecture 1000 provides computation, software, data access, and storage services that do not require end-user knowledge of the physical location or configuration of the system that delivers the services. In various examples, remote servers may deliver the services over a wide area network, such as the internet, using appropriate protocols. For instance, remote servers may deliver applications over a wide area network and may be accessible through a web browser or any other computing component. Software or components shown in previous figures as well as data associated therewith, may be stored on servers at a remote location. The computing resources in a remote server environment may be consolidated at a remote data center location, or the computing resources may be dispersed to a plurality of remote data centers. Remote server infrastructures may deliver services through shared data centers, even though the services appear as a single point of access for the user. Thus, the components and functions described herein may be provided from a remote server at a remote location using a remote server architecture. Alternatively, the components and functions may be provided from a server, or the components and functions can be installed on client devices directly, or in other ways.

In the example shown in FIG. 8, some items are similar to those shown in previous figures and those items are similarly numbered. FIG. 8 specifically shows that material application rate calibration system 335, and one or more of data stores 304 and data stores 404, may be located at a server location 1002 that is remote from material application machine 100, remote computing systems 400, other material application machines 370, and remote user interface mechanisms 364. Therefore, in the example shown in FIG. 8, material application machine 100, remote computing systems 400, other material application machines 370, and remote user interface mechanisms 364 access systems through remote server location 1002. In other examples, various other items may also be located at server location 1002, such as various other items of system architecture 300. FIG. 8 also depicts another example of a remote server architecture. FIG. 8 shows that some elements of previous figures may be disposed at a remote server location (e.g., cloud) 1002 while others may be located elsewhere. By way of example, one or more of data store(s) 304 and 404 may be disposed at a location separate from location 1002 and accessed via the remote server at location 1002. Similarly, material application rate calibration system 335 may be disposed at a location separate from locations 1002 and accessed via the remote server at locations 1002. Regardless of where the elements are located, the elements can be accessed directly by material application machine 100, remote computing systems 400, other material application machines 370, and remote user interface mechanisms 364 through a network such as a wide area network or a local area network; the elements can be hosted at a remote site by a service; or the elements can be provided as a service or accessed by a connection service that resides in a remote location. Also, data may be stored in any location, and the stored data may be accessed by, or forwarded to, operators, users, or systems. For instance, physical carriers may be used instead of, or in addition to, electromagnetic wave carriers. In some examples, where wireless telecommunication service coverage is poor or nonexistent, another machine, such as a fuel truck or other mobile machine or vehicle, may have an automated, semi-automated or manual information collection system. As a mobile machine (e.g., material application machine 100) comes close to the machine containing the information collection system, such as a fuel truck prior to fueling, the information collection system collects the information from the mobile machine using any type of ad-hoc wireless connection. The collected information may then be forwarded to another network when the machine containing the received information reaches a location where wireless telecommunication service coverage or other wireless coverage- is available. For instance, a fuel truck may enter an area having wireless communication coverage when traveling to a location to fuel other machines or when at a main fuel storage location. All of these architectures are contemplated herein. Further, the information may be stored on a mobile machine until the mobile machine enters an area having wireless communication coverage. The mobile machine, itself, may send the information to another network.

It will also be noted that the elements of previous figures, or portions thereof, may be disposed on a wide variety of different devices. One or more of those devices may include an on-board computer, an electronic control unit, a display unit, a server, a desktop computer, a laptop computer, a tablet computer, or other mobile device, such as a palm top computer, a cell phone, a smart phone, a multimedia player, a personal digital assistant, etc.

In some examples, remote server architecture 1000 may include cybersecurity measures. Without limitation, these measures may include encryption of data on storage devices, encryption of data sent between network nodes, authentication of people or processes accessing data, as well as the use of ledgers for recording metadata, data, data transfers, data accesses, and data transformations. In some examples, the ledgers may be distributed and immutable (e.g., implemented as blockchain).

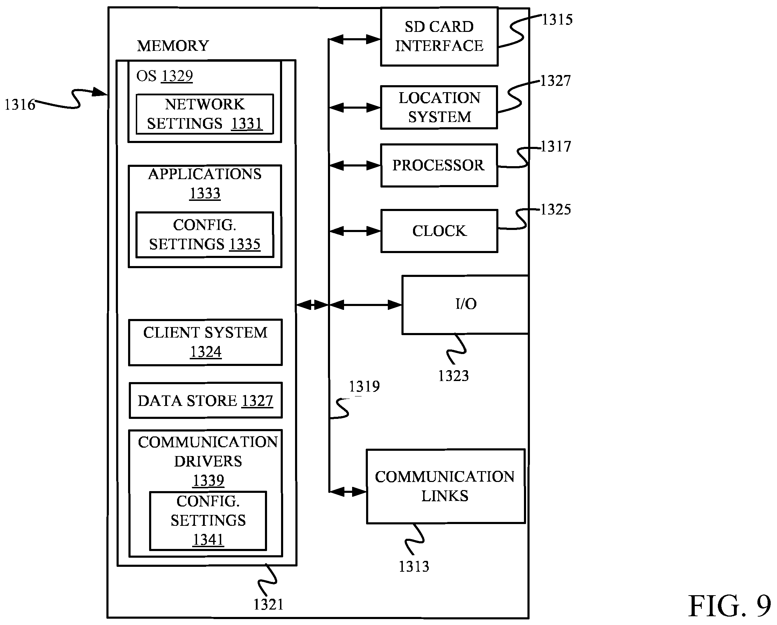

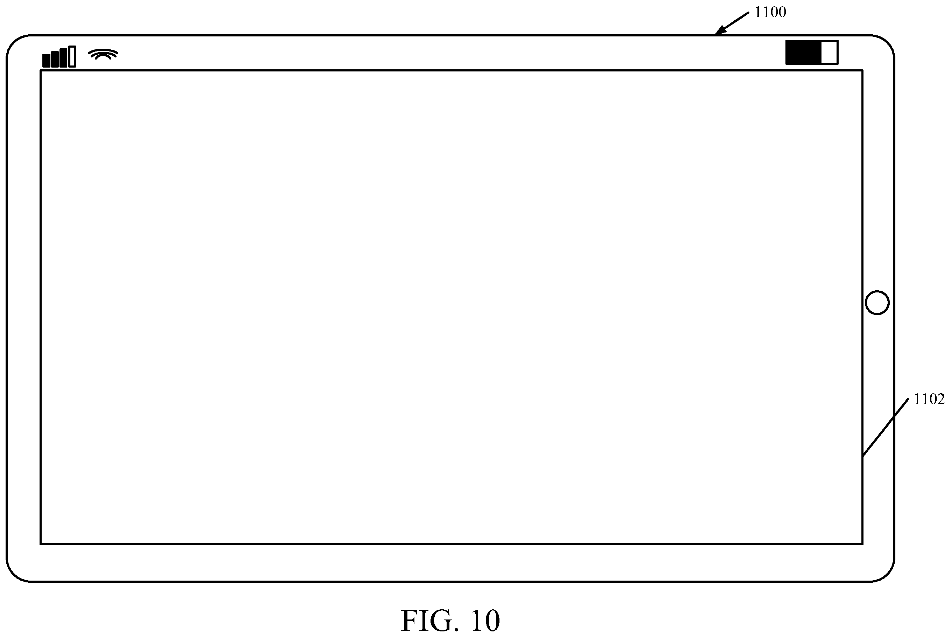

FIG. 9 is a simplified block diagram of one illustrative example of a handheld or mobile computing device that can be used as a user's or client's handheld device 1316, in which the present system (or parts of it) can be deployed. For instance, a mobile device can be deployed in the operator compartment of a mobile machine (e.g., a material application machine 100) for use in generating, processing, or displaying the outputs 630 discussed above. FIGS. 10-11 are examples of handheld or mobile devices.

FIG. 9 provides a general block diagram of the components of a client device 1316 that can run some components shown in previous figures, that interact with them, or both. In the device 1316, a communications link 1313 is provided that allows the handheld device to communicate with other computing devices and under some examples provides a channel for receiving information automatically, such as by scanning. Examples of communications link 1313 include allowing communication though one or more communication protocols, such as wireless services used to provide cellular access to a network, as well as protocols that provide local wireless connections to networks.

In other examples, applications can be received on a removable Secure Digital (SD) card that is connected to an interface 1315. Interface 1315 and communication links 1313 communicate with a processor 1317 (which can also embody processors or servers from other figures) along a bus 1319 that is also connected to memory 1321 and input/output (I/O) components 1323, as well as clock 1325 and location system 1327.

I/O components 1323, in one example, are provided to facilitate input and output operations. I/O components 1323 for various examples of the device 16 can include input components such as buttons, touch sensors, optical sensors, microphones, touch screens, proximity sensors, accelerometers, orientation sensors and output components such as a display device, a speaker, and or a printer port. Other I/O components 1323 can be used as well.

Clock 25 illustratively comprises a real time clock component that outputs a time and date. It can also, illustratively, provide timing functions for processor 1317.

Location system 1327 illustratively includes a component that outputs a current geographical location of device 1316. This can include, for instance, a global positioning system (GPS) receiver, a LORAN system, a dead reckoning system, a cellular triangulation system, or other positioning system. Location system 1327 can also include, for example, mapping software or navigation software that generates desired maps, navigation routes and other geographic functions. Memory 1321 stores operating system 1329, network settings 1331, applications 1333, application configuration settings 1335, data store 1337, client system 1324, communication drivers 1339, and communication configuration settings 1341. Memory 1321 can include all types of tangible volatile and non-volatile computer-readable memory devices. Memory 1321 may also include computer storage media (described below). Memory 1321 stores computer readable instructions that, when executed by processor 1317, cause the processor to perform computer-implemented steps or functions according to the instructions. Processor 1317 may be activated by other components to facilitate their functionality as well.

FIG. 10 shows one example in which device 1316 is a tablet computer 1100. In FIG. 10, computer 1100 is shown with user interface display screen 1102. Screen 1102 can be a touch screen or a pen-enabled interface that receives inputs from a pen or stylus. Tablet computer 1100 may also use an on-screen virtual keyboard. Of course, computer 1100 might also be attached to a keyboard or other user input device through a suitable attachment mechanism, such as a wireless link or USB port, for instance. Computer 1100 may also illustratively receive voice inputs as well.

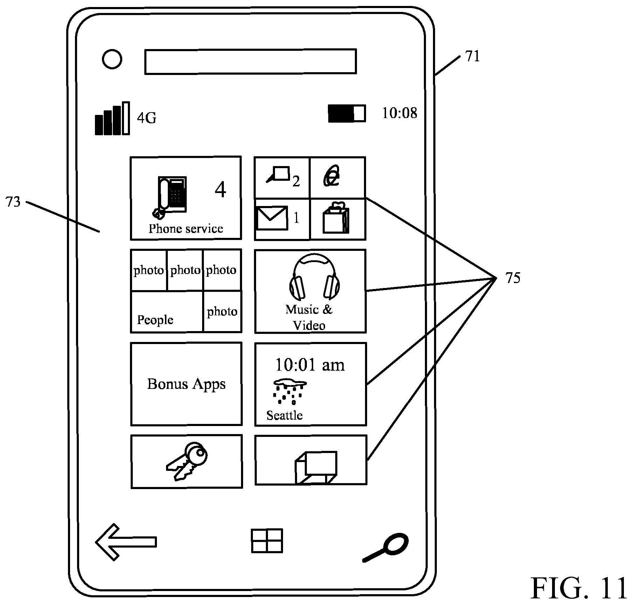

FIG. 11 is similar to FIG. 10 except that the device is a smart phone 71. Smart phone 71 has a touch sensitive display 73 that displays icons or tiles or other user input mechanisms 75.

Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

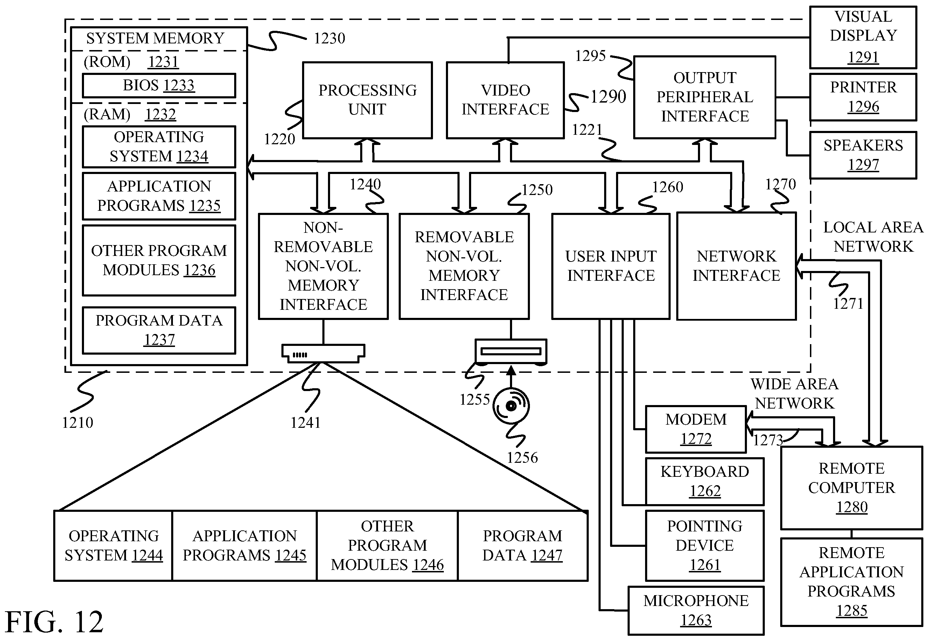

FIG. 12 is one example of a computing environment in which elements of previous figures described herein can be deployed. With reference to FIG. 12, an example system for implementing some embodiments includes a computing device in the form of a computer 1210 programmed to operate as discussed above. Components of computer 1210 may include, but are not limited to, a processing unit 1220 (which can comprise processors or servers from previous figures), a system memory 1230, and a system bus 1221 that couples various system components including the system memory to the processing unit 1220. The system bus 1221 may be any of several types of bus structures including a memory bus or memory controller, a peripheral bus, and a local bus using any of a variety of bus architectures. Memory and programs described with respect to previous figures described herein can be deployed in corresponding portions of FIG. 12.

Computer 1210 typically includes a variety of computer readable media. Computer readable media may be any available media that can be accessed by computer 1210 and includes both volatile and nonvolatile media, removable and non-removable media. By way of example, and not limitation, computer readable media may comprise computer storage media and communication media. Computer storage media is different from, and does not include, a modulated data signal or carrier wave. Computer readable media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 1210. Communication media may embody computer readable instructions, data structures, program modules or other data in a transport mechanism and includes any information delivery media. The term "modulated data signal" means a signal that has one or more of its characteristics set or changed in such a manner as to encode information in the signal. The system memory 1230 includes computer storage media in the form of volatile and/or nonvolatile memory or both such as read only memory (ROM) 1231 and random access memory (RAM) 1232. A basic input/output system 1233 (BIOS), containing the basic routines that help to transfer information between elements within computer 1210, such as during start-up, is typically stored in ROM 1231. RAM 1232 typically contains data or program modules or both that are immediately accessible to and/or presently being operated on by processing unit 1220. By way of example, and not limitation, FIG. 12 illustrates operating system 1234, application programs 1235, other program modules 1236, and program data 1237.

The computer 1210 may also include other removable/non-removable volatile/nonvolatile computer storage media. By way of example only, FIG. 12 illustrates a hard disk drive 1241 that reads from or writes to non-removable, nonvolatile magnetic media, an optical disk drive 1255, and nonvolatile optical disk 1256. The hard disk drive 1241 is typically connected to the system bus 1221 through a non-removable memory interface such as interface 1240, and optical disk drive 1255 are typically connected to the system bus 1221 by a removable memory interface, such as interface 1250.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 12, provide storage of computer readable instructions, data structures, program modules and other data for the computer 1210. In FIG. 12, for example, hard disk drive 1241 is illustrated as storing operating system 1244, application programs 1245, other program modules 1246, and program data 1247. Note that these components can either be the same as or different from operating system 1234, application programs 1235, other program modules 1236, and program data 1237.

A user may enter commands and information into the computer 1210 through input devices such as a keyboard 1262, a microphone 1263, and a pointing device 1261, such as a mouse, trackball or touch pad. Other input devices (not shown) may include a joystick, game pad, satellite dish, scanner, or the like. These and other input devices are often connected to the processing unit 1220 through a user input interface 1260 that is coupled to the system bus, but may be connected by other interface and bus structures. A visual display 1291 or other type of display device is also connected to the system bus 1221 via an interface, such as a video interface 1290. In addition to the monitor, computers may also include other peripheral output devices such as speakers 1297 and printer 1296, which may be connected through an output peripheral interface 1295.

The computer 1210 is operated in a networked environment using logical connections (such as a controller area network - CAN, local area network - LAN, or wide area network WAN) to one or more remote computers, such as a remote computer 1280.

When used in a LAN networking environment, the computer 1210 is connected to the LAN 1271 through a network interface or adapter 1270. When used in a WAN networking environment, the computer 1210 typically includes a modem 1272 or other means for establishing communications over the WAN 1273, such as the Internet. In a networked environment, program modules may be stored in a remote memory storage device. FIG. 12 illustrates, for example, that remote application programs 1285 can reside on remote computer 1280.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of the claims.

## Claims

1. A mobile agricultural material application machine (100, 2) comprising:
one or more ground engaging traction elements (20, 30) configured to carry the mobile agricultural material application machine (100, 2) over a worksite along a travel path;
one or more material tanks (12, 14, 16, 18/ 202, 204, 206, 208), configured to hold a material;
one or more material quantity sensors (345, 349) configured to detect a quantity of the material in the one or more material tanks (12, 14, 16, 18/ 202, 204, 206, 208) and generate material quantity sensor data indicative of the quantity of the material in the one or more tanks (12, 14, 16, 18/ 202, 204, 206, 208);
one or more calibration conditions sensors (340) configured to detect one or more calibration conditions and generate calibration conditions sensor data indicative of the one or more calibration conditions; and
a control system (314) configured to:
determine (824) conditions are suitable to perform a material application rate calibration operation while the mobile agricultural travels along the travel path based on the calibration conditions sensor data indicative of the one or more calibration conditions; and
perform (826) the material application rate calibration operation while the mobile agricultural material application travels along the travel path based on the determination that conditions are suitable to perform the material rate calibration operation.

2. The mobile agricultural material application machine (100, 2) of claim 1, wherein the control system (314) is configured, in performing the material rate calibration operation, to:
obtain a reference material quantity indicative of a reference quantity of the material in the one or more material tanks (12, 14, 16, 18/ 202, 204, 206, 208) corresponding to a first time;
determine an area covered by the mobile agricultural material application machine (100, 2) since the first time, based on data indicative of the area covered by the mobile agricultural machine since the first time;
determine, at a second time, a calibrated material application rate based on the determined area covered and the material quantity sensor data indicative of the quantity of the material in the one or more tanks (12, 14, 16, 18/ 202, 204, 206, 208); and
control the mobile agricultural material application machine (100, 2) based on the calibrated material application rate.

3. The mobile agricultural material application machine (100, 2) of claim 1 or 2, wherein the control system (314) is further configured, in performing the material rate calibration operation, to:
determine a material application rate error based on a comparison of the reference material application rate and the calibrated material application rate;
control the mobile agricultural material application machine (100, 2) based on the material application rate error value.

4. The mobile agricultural material application machine (100, 2) of one of the claims 1 to 3, wherein the control system (314) is further configured, in performing the material rate calibration operation, to:
determine one or more causes of the material application rate error based on sensor data indicative of one or more operating characteristics of the mobile agricultural material application machine (100, 2).

5. The mobile agricultural material application machine (100, 2) of claim 4, and further comprising:
a blower sensor (347) configured to detect a speed of a blower of the mobile agricultural material application machine (100, 2) and generate, as part of the sensor data indicative of the one or more operating characteristics of the mobile agricultural material application machine (100, 2), blower speed sensor data;
a speed sensor (343) configured to detect a travel speed variability of the mobile agricultural material application machine (100, 2) and generate, as part of the sensor data indicative of the one or more operating characteristics of the mobile agricultural material application machine (100, 2), speed sensor data;
a tank pressure sensor (348) configured to detect an air pressure within one of the one or more material tanks (12, 14, 16, 18/ 202, 204, 206, 208) and generate, as part of the sensor data indicative of the one or more operating characteristics of the mobile agricultural material application machine (100, 2), tank pressure sensor data; and
a material level sensor (349) configured to detect a material level of material within one of the one or more tanks (12, 14, 16, 18/ 202, 204, 206, 208) and generate, as part of the sensor data indicative of the one or more operating characteristics of the mobile agricultural material application machine (100, 2), material level sensor data; and
wherein the one or more causes comprise: (i) blower speed; (ii) travel speed variability; (iii) tank pressure; (iv) material level; or (v) a combination of (i), (ii), (iii), and (iv).

6. The mobile agricultural material application machine (100, 2) of one of the claims 1 to 5, wherein the control system (314) is further configured, in performing the material rate calibration operation, to:
update a stored material application rate relationship based on the calibrated material application rate, the stored material application rate relationship describing a relationship between travel speed of the mobile agricultural material application machine (100, 2), actuation of a material meter of the mobile agricultural material application machine (100, 2), and material application rate; and
control the mobile agricultural material application machine (100, 2) based on the updated stored material application rate relationship.

7. The mobile agricultural material application machine (100, 2) of one of the claims 1 to 6, wherein the one or more calibration conditions sensors (340) comprise one or more of:
(i) one or more turn status sensors (341) configured to generate, as at least part of the calibration conditions sensor data, turn status sensor data indicative of a turn status of the mobile agricultural material application machine (100, 2);
(ii) one or more speed sensors (343) configured to generate, as at least part of the calibration conditions sensor data, speed sensor data indicative of a travel speed of the mobile agricultural material application machine (100, 2);
(iii) one or more ground level sensors (342) configured to generate, as at least part of the calibration conditions sensor data, ground level sensor data indicative of a ground level of the worksite; or
(iv) one or more operation status sensors (344) configured to generate, as at least part of the calibration conditions sensor data, operation status sensor data indicative of a status of a sub-operation of the mobile agricultural material application machine (100, 2).

8. The mobile agricultural material application machine (100, 2) of one of the claims 1 to 7, wherein the control system (314) is further configured to:
control one or more actuators (354) to control actuation of each of one or more material meters of the mobile agricultural material application machine (100, 2) based on the material application rate calibration operation.

9. A computer implemented method of controlling a mobile agricultural material application machine (100, 2), the method comprising the mobile agricultural material application machine (100, 2) according to one of the claims 1 to 8, the method further comprising:
obtaining (802, 803) material quantity sensor data (600) indicative of a quantity of the material in the one or more tanks (12, 14, 16, 18/ 202, 204, 206, 208);
obtaining (802, 803) calibration conditions sensor data (600) indicative of one or more calibration conditions;
determining (824) conditions are suitable to perform a material application rate calibration operation while the mobile agricultural travels along the travel path based on the calibration conditions sensor data indicative of the one or more calibration conditions;
performing (826) the material application rate calibration operation while the mobile agricultural material application travels along the travel path based on the determination that conditions are suitable to perform the material rate calibration operation; and
controlling (850) the mobile agricultural material application machine (100, 2) based on the performed material application rate calibration operation.

10. The computer implemented method of claim 9, wherein performing the material application rate calibration operation comprises:
obtaining a reference material quantity indicative of a reference quantity of the material in the one or more material tanks (12, 14, 16, 18/ 202, 204, 206, 208) corresponding to a first time;
determining an area covered by the mobile agricultural material application machine (100, 2) since the first time, based on data indicative of the area covered by the mobile agricultural machine (100, 2) since the first time;
determining, at a second time, a calibrated material application rate based on the determined area covered and the material quantity sensor data indicative of the quantity of the material in the one or more tanks (12, 14, 16, 18/ 202, 204, 206, 208); and
determining a material application rate error based on a comparison of the reference material application rate and the calibrated material application rate.

11. The computer implemented method of claim 9 or 10, wherein performing the material application rate calibration operation further comprises:
obtaining blower speed sensor data indicative of a speed of a blower of the mobile agricultural material application machine (100, 2); and
determining, based on the blower speed sensor data, as a cause of the material application rate error, the speed of the blower or a stored material application rate relationship describing a relationship between travel speed of the mobile agricultural material application machine (100, 2), actuation of a material meter of the mobile agricultural material application machine (100, 2), and material application rate.

12. The computer implemented method of one of the claims 9 to 11, wherein performing the material application rate calibration operation further comprises:
obtaining speed sensor data indicative of a travel speed variability of the mobile agricultural material application machine (100, 2); and
determining, based on the speed sensor data, as a cause of the material application rate error, the travel speed variability or a stored material application rate relationship describing a relationship between travel speed of the mobile agricultural material application machine (100, 2), actuation of a material meter of the mobile agricultural material application machine (100, 2), and material application rate.

13. The computer implemented method of one of the claims 9 to 12, wherein performing the material application rate calibration operation further comprises:
obtaining material level sensor data indicative of a material level of material in one of the one or more tanks (12, 14, 16, 18/ 202, 204, 206, 208) of the mobile agricultural material application machine (100, 2); and
determining, based on the material level sensor data, as a cause of the material application rate error, the material level of material in one of the one or more material tanks (12, 14, 16, 18/ 202, 204, 206, 208) of the mobile agricultural material application machine (100, 2) or a stored material application rate relationship describing a relationship between travel speed of the mobile agricultural material application machine (100, 2), actuation of a material meter of the mobile agricultural material application machine (100, 2), and material application rate.

14. The computer implemented method of one of the claims 9 to 13, wherein performing the material application rate calibration operation further comprises:
obtaining tank pressure sensor data indicative of an air pressure of one of the one or more tanks (12, 14, 16, 18/ 202, 204, 206, 208) of the mobile agricultural material application machine (100, 2); and
determining, based on the tank pressure sensor data, as a cause of the material application rate error, the tank pressure of the one of the one or more material tanks (12, 14, 16, 18/ 202, 204, 206, 208) of the mobile agricultural material application machine (100, 2) or a stored material application rate relationship describing a relationship between travel speed of the mobile agricultural material application machine (100, 2), actuation of a material meter of the mobile agricultural material application machine (100, 2), and material application rate.

15. The computer implemented method of one of the claims 9 to 14, wherein obtaining calibration conditions sensor data indicative of one or more calibration conditions comprises two or more of:
(i) obtaining, as a part of the calibration conditions sensor data, turn status sensor data indicative of a turn status of the mobile agricultural material application machine (100, 2);
(ii) obtaining, as a part of the calibration conditions sensor data, speed sensor data indicative of a travel speed of the mobile agricultural material application machine (100, 2);
(iii) obtaining, as a part of the calibration conditions sensor data, ground level sensor data indicative of a ground level of the worksite; and (iv) obtaining, as a part of the calibration conditions sensor data, operation status sensor data indicative of a status of a sub-operation of the mobile agricultural material application machine (100, 2).
